# EUROPEAN PATENT APPLICATION

(11) **EP 4 818 927 A1**
(43) Date of publication of application: **07.10.2026**
(21) Application number: 25167992.4
(22) Date of filing: 02.04.2025
(51) Int. Cl.: G06F 16/3329, G06F 16/9032

(54) **RULE GENERATION SYSTEM**

(71) Applicant: ABB SCHWEIZ AG, 5400 Baden (CH)
(72) Inventor: FORMAGGIO, Alberto, 45100 Rovigo (IT); BHATTACHARYA, Nilavra, 68167 Mannheim (DE); GITZEL, Ralf, 68165 Mannheim (DE); TAMASCELLI, Nicola, 68259 Mannheim (DE); SONG, Chen, 68163 Mannheim (DE); BORRISON, Reuben, 68782 Brühl (DE)
(74) Representative: Maiwald GmbH

(57) **Abstract**

The present invention relates to a rule generation system (100), comprising:
- an input unit (20);
- a rule generator (10); and
- a database (30);

wherein the input unit is configured to receive a first query, wherein the first query comprises a name or type of a first device;
wherein the input unit is configured to provide the first query to the rule generator;
wherein a plurality of service reports are stored in the database, wherein each service report comprises natural language;
wherein the rule generator is configured to retrieve k service reports of the plurality of service reports stored in the database, wherein the retrieval of the k service reports comprises utilization of the first query, and where k is an integer greater than 1;
wherein the rule generator is configured to implement a Large Language Model (LLM);
wherein the rule generator is configured to utilize the LLM to identify entries from the natural language in the k service reports, wherein the identified entries comprise issues that need to be addressed for the first device, and actions taken by service technicians to mitigate the issues; and
wherein the rule generator is configured to utilize the identified entries to form at least one rule for the first device, wherein each rule comprises a tuple of the first device name or type, one issue, and an action step or series of action steps taken to mitigate the issue.

## Description

### FIELD OF THE INVENTION

The present invention relates to a rule generation system, a rule generation method, a rule preparation generation system, a rule preparation generation method, as well as computer program elements. This finds utility for the maintenance of electrical equipment such as low, medium or high voltage switchgear.

### BACKGROUND OF THE INVENTION

While the level of required knowledge for service personnel increases, a wave of new, young and inexperienced people arrive and need tools to support them. This applies to many technical fields, one example being (low, medium and high voltage) switchgears.

Preventive and corrective maintenance of for example electrical equipment such as switchgears is a complex task that requires expert knowledge to address a wide range of potential issues. Past service reports can often contain valuable information and solution regarding commonly occurring faults, and potentially "rules" to solve such problems. A rule can have three elements: Device, Problem and Action List.

However, relevant information contained in such reports - as well as manuals and other knowledge bases - are scattered and disorganized. Furthermore, they can be in multiple different languages, based on their country of origin. The reports, even when relating to a same device, can be difficult to navigate, because different report authors can refer to a same device differently. This makes it a high-cognitive-effort task for future service technicians to navigate multiple documents and learn from past knowledge. It also makes the possibility of providing an automated system very difficult. Therefore, constructing a unified knowledge base from the plethora of available information is a technical challenge.

There is a need to address this issue.

### SUMMARY OF THE INVENTION

Therefore, it would be advantageous to have an improved support tool for service personnel working on low, medium and high voltage switchgear.

The object of the present invention is solved with the subject matter of the independent claims, wherein further embodiments are incorporated in the dependent claims.

In a first aspect, there is provided a rule generation system, comprising:
- an input unit;
- a rule generator; and
- a database.

The input unit is configured to receive a first query, wherein the first query comprises a name or type of a first device. The input unit is configured to provide the first query to the rule generator. A plurality of service reports are stored in the database, and each service report comprises natural language. The rule generator is configured to retrieve k service reports of the plurality of service reports stored in the database. The retrieval of the k service reports comprises utilization of the first query, and k is an integer greater than 1. The rule generator is configured to implement a Large Language Model (LLM). The rule generator is configured to utilize the LLM to identify entries from the natural language in the k service reports. The identified entries comprise issues that need to be addressed for the first device, and actions taken by service technicians to mitigate the issues.

It is to be noted that retrieval of the k service reports utilizing the first query does not mean that the k service reports are downloaded or moved from the database, but retrieval of the k service reports utilizing the first query can mean that the k service reports are selected or identified utilizing the first query.

The rule generator is configured to utilize the identified entries to form at least one rule for the first device. Each rule comprises a tuple of the first device name or type, one issue, and an action step or series of action steps taken to mitigate the issue.

In this way, appropriate service reports can be retrieved to generate a knowledge graph.

In an example, the rule generator is configured to generate a knowledge graph, and wherein the generation comprises utilization of the at least one rule for the first device.

It is to be noted that implementation of a Large Language Model (LLM), can mean utilizing an existing LLM to fit the specific needs, or can mean that an LLM is in effect constructed for the specific needs.

It is to be noted that the rule generator can be one processor or a number of processors that are able to perform the claimed features.

The knowledge graph nodes that are linked together can be considered as a rule relating to the action steps required to mitigate an issue for an instrument type.

In an example, the plurality of service reports comprise natural language in a plurality of different languages, the plurality of different languages comprising two or more of English, German, French, Italian, Spanish, French, Portuguese, Japanese, Chinese.

The plurality of different languages can be other than these languages, and could be any language of a service report.

Thus, the system works in one unified language, but is able to work with reports from many languages or indeed a single report with more than one language within it.

In an example, the rule generator is configured to utilize the at least one rule for the first device to generate at least one knowledge graph node. For the first device name or type, each issue, and action step are transformed into separate knowledge graph nodes. The rule generator is configured to utilize the at least one knowledge graph node to generate the knowledge graph. The generation of the knowledge graph comprises forming at least one node group, and each node group comprises at least one knowledge graph node.

In an example, the input unit is configured to receive a second query. The second query comprises a name and/or type of a second device. The input unit is configured to provide the second query to the rule generator. The rule generator is configured to retrieve m service reports of the plurality of service reports. The retrieval of the m service reports comprises utilization of the second query, and m is an integer greater than 1. The rule generator is configured to utilize the LLM to identify entries from the natural language in the m service reports. The identified entries comprise issues that need to be addressed for the second device, and actions taken by service technicians to mitigate the issues. The rule generator is configured to utilize the identified entries to form at least one rule for the second device. Each rule comprises a tuple of the second device name or type, one issue, and an action step or series of action steps taken to mitigate the issue. The generation of the knowledge graph comprises utilization of the at least one rule for the second device.

In an example, the rule generator is configured to utilize the plurality of rules to generate a plurality of knowledge graph nodes. Each instrument device name or type, issue, and action step are transformed into separate knowledge graph nodes. The rule generator is configured to utilize the plurality of knowledge graph nodes to generate the knowledge graph. The generation of the knowledge graph comprises forming a plurality of node groups, and each node group comprises a plurality of knowledge graph nodes that are linked together.

In an example, the rule generator is configured to generate a plurality of bigrams of the name or type of the first device in the query. Each of the plurality of service reports stored in the database comprises associated information. The associated information for each service report comprises a plurality of bigrams of a name or type of a device associated with the service report. The retrieval of the k service reports comprises a comparison of the plurality of bigrams of the name or type of the first device in the query with the plurality of bigrams of the name or type of the device associated with each service report.

In an example, for each service report stored in the database the rule generator is configured to determine a score based on the comparison of the plurality of bigrams of the name or type of the first device in the query with the plurality of bigrams of the name or type of the device associated with that service report. The rule generator is configured to select the k service reports from the plurality of service reports as the service reports with the k highest scores.

In an example, the score for each service report is determined based on a ROUGE-2 Recall computation.

Thus, a similarity comparison is utilized to determine the most appropriate service reports to be used in generating a knowledge graph.

In this way, the effect of different report authors describing devices or types of devices is mitigated, and the system can still identify and retrieve the most appropriate search reports for a particular device in order that the information in that report can be used to form rules.

In an example, generation of the plurality of bigrams of the name or type of the first device in the query comprises removal of any spaces in the name or type of the first device in the query and the plurality of bigrams are generated from the name or type of the first device in the query that has had the spaces removed. For each service report saved in the database the plurality of bigrams of the name or type of the device associated with the service report were generated from the name or type of the device associated with the service report from which spaces had been removed.

In this way, the effect of different report authors using spaces different when describing a device or type of device is mitigated.

In an example, generation of the plurality of bigrams of the name or type of the first device in the query comprises a conversion of all letters in the name or type of the first device in the query to lower case and the plurality of bigrams are generated from the name or type of the first device in the query that has had all letters converted to lowercase. For each service report saved in the database the plurality of bigrams of the name or type of the device associated with the service report were generated from the name or type of the device associated with the service report where all letters in the name or type of device had been converted to lower case.

In this way, the effect of different report authors using different mixtures of upper and lower case characters to describe a device or type of device is mitigated.

In an example, the plurality of service reports comprise natural language in a plurality of different languages, the plurality of different languages comprising two or more of English, German, French, Italian, Spanish, French, Portuguese, Japanese, Chinese.

Thus, in effect the new development provides a pipeline that extracts electrical equipment and maintenance rule from multilingual natural language text in service reports, and employs a knowledge graph to appropriately store the extracted rules. In this manner, searching and information retrieval of relevant information for a current maintenance job in terms of locating the appropriate rules relating to the actions required to mitigate an issue at hand for a particular instrument type is made more efficient.

In an example, each knowledge graph node comprises at least one searchable attribute or property, the at least one searchable attribute or property comprising at least one of device name or type, issue, action step.

This makes searching with respect to instruments, issues, and actions more efficient.

In an example, the system comprises an output unit, wherein the output unit is configured to output the knowledge graph.

Thus, the knowledge graph can then be used on/by another system.

In a second aspect, there is provide a rule generating method comprising:
- receiving, by an input unit, a first query, wherein the first query comprises a name or type of a first device;
- providing, by the input unit, the first query to a rule generator;
- retrieving, by the rule generator, k service reports of a plurality of service reports stored in a database, wherein the retrieval of the k service reports comprises utilization of the first query, where k is an integer greater than 1, and wherein each service report comprises natural language;
- utilizing, by the rule generator, a Large Language Model (LLM) to identify entries from the natural language in the k service reports, wherein the identified entries comprise issues that need to be addressed for the first device, and actions taken by service technicians to mitigate the issues; and
- utilizing, by the rule generator, the identified entries to form at least one rule for the first device, wherein each rule comprises a tuple of the first device name or type, one issue, and an action step or series of action steps taken to mitigate the issue.

It is to be noted that retrieval of the k service reports utilizing the first query does not mean that the k service reports are downloaded or moved from the database, but retrieval of the k service reports utilizing the first query can mean that the k service reports are selected or identified utilizing the first query.

In this way, appropriate service reports can be retrieved to generate a knowledge graph.

In an example, the method comprises:
generating, by the rule generator, a knowledge graph, and wherein the generating comprises utilizing the at least one rule for the first device.

It is to be noted that implementation of a Large Language Model (LLM), can mean utilizing an existing LLM to fit the specific needs, or can mean that an LLM is in effect constructed for the specific needs.

The knowledge graph nodes that are linked together can be considered as a rule relating to the action steps required to mitigate an issue for an instrument type.

In an example, the plurality of service reports comprise natural language in a plurality of different languages, the plurality of different languages comprising two or more of English, German, French, Italian, Spanish, French, Portuguese, Japanese, Chinese.

The plurality of different languages can be other than these languages, and could be any language of a service report.

Thus, the system works in one unified language, but is able to work with reports from many languages or indeed a single report with more than one language within it.

In an example, the method comprises;
- utilizing, by the rule generator, the at least one rule for the first device to generate at least one knowledge graph node, wherein for the first device name or type, each issue, and action step are transformed into separate knowledge graph nodes; and
- utilizing, by the rule generator, the at least one knowledge graph node to generate the knowledge graph, the generating comprising forming at least one node group, wherein each node group comprises at least one knowledge graph node.

In an example, the method comprises:
- receiving, by the input unit, a second query, wherein the second query comprises a name and/or type of a second device;
- providing, by the input unit, the second query to the rule generator;
- retrieving, by the rule generator, m service reports of the plurality of service reports, wherein the retrieval of the m service reports comprises utilization of the second query, and where m is an integer greater than 1;
- utilizing, by the rule generator, the LLM to identify entries from the natural language in the m service reports, wherein the identified entries comprise issues that need to be addressed for the second device, and actions taken by service technicians to mitigate the issues;
- utilizing, by the rule generator, the identified entries to form at least one rule for the second device, wherein each rule comprises a tuple of the second device name or type, one issue, and an action step or series of action steps taken to mitigate the issue; and
- wherein the generating the knowledge graph comprises utilizing the at least one rule for the second device.

In an example, the method comprises:
- utilizing, by the rule generator, the plurality of rules to generate a plurality of knowledge graph nodes, wherein each instrument device name or type, issue, and action step are transformed into separate knowledge graph nodes; and
- utilizing, by the rule generator, the plurality of knowledge graph nodes to generate the knowledge graph, the generating comprising forming a plurality of node groups, wherein each node group comprises a plurality of knowledge graph nodes that are linked together.

In an example, the method comprises:
- generating, by the rule generator, a plurality of bigrams of the name or type of the first device in the query, and wherein each of the plurality of service reports stored in the database comprises associated information, wherein the associated information for each service report comprises a plurality of bigrams of a name or type of a device associated with the service report, and
- wherein the retrieving the k service reports comprises comparing the plurality of bigrams of the name or type of the first device in the query with the plurality of bigrams of the name or type of the device associated with each service report.

In an example, the method comprises:
- determining, by the rule generator, for each service report stored in the database, a score based on the comparison of the plurality of bigrams of the name or type of the first device in the query with the plurality of bigrams of the name or type of the device associated with that service report, and
- selecting, by the rule generator, the k service reports from the plurality of service reports as the service reports with the k highest scores.

In an example, the score for each service report is determined based on a ROUGE-2 Recall computation.

Thus, a similarity comparison is utilized to determine the most appropriate service reports to be used in generating a knowledge graph.

In this way, the effect of different report authors describing devices or types of devices is mitigated, and the system can still identify and retrieve the most appropriate search reports for a particular device in order that the information in that report can be used to form rules.

In an example, generating the plurality of bigrams of the name or type of the first device in the query comprises removing any spaces in the name or type of the first device in the query, and the plurality of bigrams are generated from the name or type of the first device in the query that has had the spaces removed, and wherein for each service report saved in the database the plurality of bigrams of the name or type of the device associated with the service report were generated from the name or type of the device associated with the service report from which spaces had been removed.

In this way, the effect of different report authors using spaces different when describing a device or type of device is mitigated.

In an example, generating the plurality of bigrams of the name or type of the first device in the query comprises converting all letters in the name or type of the first device in the query to lower case and the plurality of bigrams are generated from the name or type of the first device in the query that has had all letters converted to lowercase, and wherein for each service report saved in the database the plurality of bigrams of the name or type of the device associated with the service report were generated from the name or type of the device associated with the service report where all letters in the name or type of device had been converted to lower case.

In this way, the effect of different report authors using different mixtures of upper and lower case characters to describe a device or type of device is mitigated.

In an example, the plurality of service reports comprise natural language in a plurality of different languages, the plurality of different languages comprising two or more of English, German, French, Italian, Spanish, French, Portuguese, Japanese, Chinese.

Thus, in effect the new development provides a pipeline that extracts electrical equipment and maintenance rule from multilingual natural language text in service reports, and employs a knowledge graph to appropriately store the extracted rules. In this manner, searching and information retrieval of relevant information for a current maintenance job in terms of locating the appropriate rules relating to the actions required to mitigate an issue at hand for a particular instrument type is made more efficient.

In an example, each knowledge graph node comprises at least one searchable attribute or property, the at least one searchable attribute or property comprising at least one of device name or type, issue, action step.

This makes searching with respect to instruments, issues, and actions more efficient.

In an example, the method comprises outputting, by an output unit, the knowledge graph.

In a third aspect, there is provided a rule preparation generation system, comprising:
- an input unit;
- a rule generator; and
- a database.

The input unit is configured to receive a candidate device name or type, wherein the candidate device name or type is comprised within a new service report.

The input unit is configured to provide the candidate device name or type to the rule generator.

The rule generator is configured to select a device name or type from a plurality of target device names or types, the selection comprised utilization of the candidate device name or type.

The rule generator is configured to update the candidate device name or type in the new service report with the selected device name or type to generate an updated new service report.

The rule generator is configured to save the updated new service report in the database.

Thus, the rule generator is configured to interrogate a new service report, that can have device names or types written in a bespoke manner based on the technician who wrote the report. At this stage, it is difficult to use such a report, with a device name or type written in a form that could be non-standard, in the generation of a rule. However, now the device name or type in the new service report has been updated to a standard device name or type, and this updated new report can be utilized in the generation of a new rule.

It is to be noted that the rule generator of the rule generation system can operate as the rule generator of the rule preparation generation system. Indeed, the rule generation system can operate as the rule preparation generation system.

In this way, appropriate service reports can be retrieved to generate a knowledge graph.

In an example, the candidate device name or type is extracted from the new service report by a LLM.

In an example, the candidate device name or type is extracted from the new service report by a human.

In an example, the plurality of target device names or types are stored in a database or a memory of the rule preparation generation system.

In an example, the rule generator is configured to generate a plurality of bigrams of the candidate device name or type. Each of the plurality of target device names or types comprises associated information, and the associated information for each target device name or type comprises a plurality of bigrams of the target device name or type of a device. The selection of the device name or type from the plurality of target device names or types comprises a comparison of the plurality of bigrams of the of the candidate device name or type with the plurality of bigrams of each target device name or type of the plurality of target devices or types.

In an example, for each target device name or type the rule generator is configured to determine a score based on the comparison of the plurality of bigrams of the of the candidate device name or type with the plurality of bigrams of the target device name or type. The rule generator is configured to select the device name or type from the plurality of target device names or types as the target device name or type with the highest score.

In an example, the score for each target device name or type is determined based on a ROUGE-2 Recall computation.

Thus, a similarity comparison is utilized to determine the most appropriate device name or type to be used to replace the candidate device name or type in a new service report.

In this way, the effect of different report authors describing devices or types of devices is mitigated, and the system can still identify and retrieve the most appropriate search reports for a particular device in order that the information in that report can be used to form rules.

In an example, the generation of the plurality of bigrams of the candidate device name or type comprises removal of any spaces in the candidate device name or type and the plurality of bigrams are generated from the candidate device name or type that has had the spaces removed. For each target device name or type the plurality of bigrams of each target device name or type were generated from each target device name or type from which spaces had been removed.

In this way, the effect of different report authors using spaces different when describing a device or type of device is mitigated.

In an example, the generation of the plurality of bigrams of the candidate device name or type comprises a conversion of all letters in the candidate device name or type to lower case and the plurality of bigrams are generated from the candidate name or type that has had all letters converted to lowercase. For each target device name or type the plurality of bigrams of the target device name or type were generated from the target device name or type that has had all letters converted to lower case.

In this way, the effect of different report authors using different mixtures of upper and lower case characters to describe a device or type of device is mitigated.

In an example, the system comprises an output unit, wherein the output unit is configured to save the updated new service report in the database.

In a fourth aspect, there is provided a rule preparation generating method, comprising:
- receiving, by an input unit, a candidate device name or type, wherein the candidate device name or type is comprised within a new service report;
- providing, by the input unit, the candidate device name or type to a rule generator;
- selecting, by the rule generator, a device name or type from a plurality of target device names or types, the selecting comprised utilizing the candidate device name or type;
- updating, by the rule generator, the candidate device name or type in the new service report with the selected device name or type to generate an updated new service report; and
- saving, by the rule generator, the updated new service report in a database.

Thus, the rule preparation generating method interrogates a new service report, that can have device names or types written in a bespoke manner based on the technician who wrote the report. At this stage, it is difficult to use such a report, with a device name or type written in a form that could be non-standard, in the generation of a rule. However, now the device name or type in the new service report has been updated to a standard device name or type, and this updated new report can be utilized in the generation of a new rule.

In this way, appropriate service reports can be retrieved to generate a knowledge graph.

In an example, the candidate device name or type is extracted from the new service report by a LLM.

In an example, the candidate device name or type is extracted from the new service report by a human.

In an example, the plurality of target device names or types are stored in a database or a memory of the rule preparation generating system.

In an example, the method comprises generating, by the rule generator, a plurality of bigrams of the candidate device name or type. Each of the plurality of target device names or types comprises associated information, and the associated information for each target device name or type comprises a plurality of bigrams of the target device name or type of a device. The selecting the device name or type from the plurality of target device names or types comprises comparing the plurality of bigrams of the of the candidate device name or type with the plurality of bigrams of each target device name or type of the plurality of target devices or types.

In an example, the method comprises, for each target device name or type, determined by the rule generator, a score based on the comparing the plurality of bigrams of the of the candidate device name or type with the plurality of bigrams of the target device name or type. The selecting, by the rule generator, the device name or type from the plurality of target device names or types comprises selecting a target device name or type with the highest score.

In an example, the score for each target device name or type is determined based on a ROUGE-2 Recall computation.

Thus, a similarity comparison is utilized to determine the most appropriate device name or type to be used to replace the candidate device name or type in a new service report.

In this way, the effect of different report authors describing devices or types of devices is mitigated, and the system can still identify and retrieve the most appropriate search reports for a particular device in order that the information in that report can be used to form rules.

In an example, the generating the plurality of bigrams of the candidate device name or type comprises removing any spaces in the candidate device name or type and the plurality of bigrams are generated from the candidate device name or type that has had the spaces removed. For each target device name or type the plurality of bigrams of each target device name or type were generated from each target device name or type from which spaces had been removed.

In this way, the effect of different report authors using spaces different when describing a device or type of device is mitigated.

In an example, the generating the plurality of bigrams of the candidate device name or type comprises converting all letters in the candidate device name or type to lower case and the plurality of bigrams are generated from the candidate name or type that has had all letters converted to lowercase. For each target device name or type the plurality of bigrams of the target device name or type were generated from the target device name or type that has had all letters converted to lower case.

In this way, the effect of different report authors using different mixtures of upper and lower case characters to describe a device or type of device is mitigated.

In a fifth aspect there is provided a computer program element for controlling a processor to carry out the method of the second aspect and any of its associated examples.

In an example, there is provided a computer readable medium having stored the computer element of the fifth aspect.

In a sixth aspect there is provided a computer program element for controlling a processor to carry out the method of the fourth aspect and any of its associated examples.

In an example, there is provided a computer readable medium having stored the computer element of the sixth aspect.

The computer program elements can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an exemplar rule generation system, where an optional element is shown with dashed lines; and
Fig. 2 shows a detailed embodiment of score computation within a rule generation system.

### DETAILED DESCRIPTION OF EMBODIMENTS

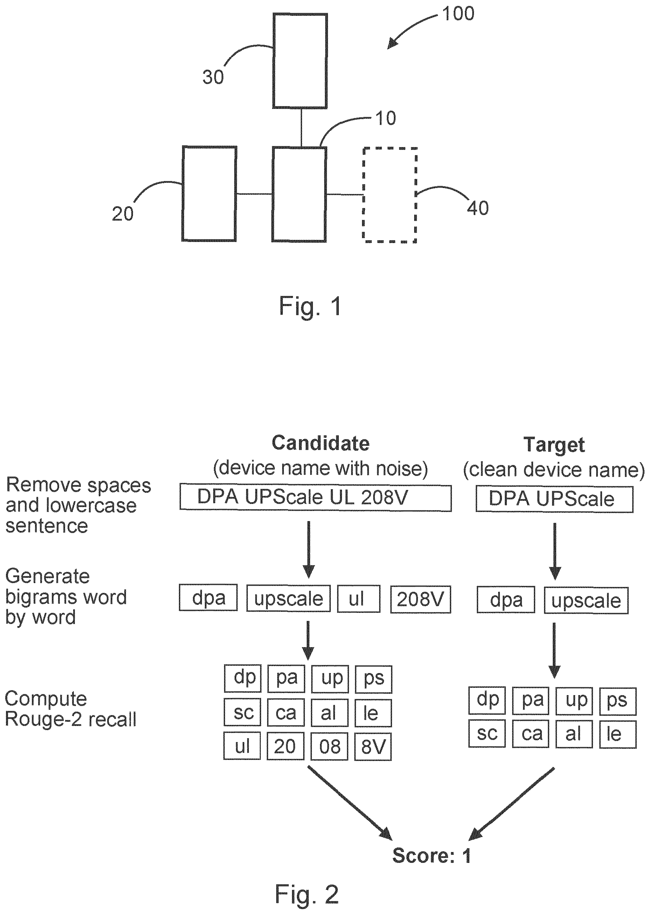

Fig. 1 shows an exemplar rule generation system 100 comprising:
- an input unit 20;
- a rule generator 10; and
- a database 30.

The input unit is configured to receive a first query, wherein the first query comprises a name or type of a first device. The input unit is configured to provide the first query to the rule generator. A plurality of service reports are stored in the database, and each service report comprises natural language. The rule generator is configured to retrieve k service reports of the plurality of service reports stored in the database. The retrieval of the k service reports comprises utilization of the first query, and k is an integer greater than 1. The rule generator is configured to implement a Large Language Model (LLM). The rule generator is configured to utilize the LLM to identify entries from the natural language in the k service reports. The identified entries comprise issues that need to be addressed for the first device, and actions taken by service technicians to mitigate the issues.

The rule generator is configured to utilize the identified entries to form at least one rule for the first device. Each rule comprises a tuple of the first device name or type, one issue, and an action step or series of action steps taken to mitigate the issue.

It is to be noted that retrieval of the k service reports utilizing the first query does not mean that the k service reports are downloaded or moved from the database, but retrieval of the k service reports utilizing the first query can mean that the k service reports are selected or identified utilizing the first query.

In this way, appropriate service reports can be retrieved to generate a knowledge graph.

In an example, the rule generator is configured to generate a knowledge graph, and the generation comprises utilization of the at least one rule for the first device.

It is to be noted that implementation of a Large Language Model (LLM), can mean utilizing an existing LLM to fit the specific needs, or can mean that an LLM is in effect constructed for the specific needs.

It is to be noted that the rule generator can be one processor or a number of processors that are able to perform the claimed features.

The knowledge graph nodes that are linked together can be considered as a rule relating to the action steps required to mitigate an issue for an instrument type.

In an example, the plurality of service reports comprise natural language in a plurality of different languages, the plurality of different languages comprising two or more of English, German, French, Italian, Spanish, French, Portuguese, Japanese, Chinese.

The plurality of different languages can be other than these languages, and could be any language of a service report.

Thus, the system works in one unified language, but is able to work with reports from many languages or indeed a single report with more than one language within it.

In an example, the rule generator is configured to utilize the at least one rule for the first device to generate at least one knowledge graph node. For the first device name or type, each issue, and action step are transformed into separate knowledge graph nodes. The rule generator is configured to utilize the at least one knowledge graph node to generate the knowledge graph. The generation of the knowledge graph comprises forming at least one node group, and each node group comprises at least one knowledge graph node.

In an example, the input unit is configured to receive a second query. The second query comprises a name and/or type of a second device. The input unit is configured to provide the second query to the rule generator. The rule generator is configured to retrieve m service reports of the plurality of service reports. The retrieval of the m service reports comprises utilization of the second query, and m is an integer greater than 1. The rule generator is configured to utilize the LLM to identify entries from the natural language in the m service reports. The identified entries comprise issues that need to be addressed for the second device, and actions taken by service technicians to mitigate the issues. The rule generator is configured to utilize the identified entries to form at least one rule for the second device. Each rule comprises a tuple of the second device name or type, one issue, and an action step or series of action steps taken to mitigate the issue. The generation of the knowledge graph comprises utilization of the at least one rule for the second device.

In an example, the rule generator is configured to utilize the plurality of rules to generate a plurality of knowledge graph nodes. Each instrument device name or type, issue, and action step are transformed into separate knowledge graph nodes. The rule generator is configured to utilize the plurality of knowledge graph nodes to generate the knowledge graph. The generation of the knowledge graph comprises forming a plurality of node groups, and each node group comprises a plurality of knowledge graph nodes that are linked together.

In an example, the rule generator is configured to generate a plurality of bigrams of the name or type of the first device in the query. Each of the plurality of service reports stored in the database comprises associated information. The associated information for each service report comprises a plurality of bigrams of a name or type of a device associated with the service report. The retrieval of the k service reports comprises a comparison of the plurality of bigrams of the name or type of the first device in the query with the plurality of bigrams of the name or type of the device associated with each service report.

In an example, for each service report stored in the database the rule generator is configured to determine a score based on the comparison of the plurality of bigrams of the name or type of the first device in the query with the plurality of bigrams of the name or type of the device associated with that service report. The rule generator is configured to select the k service reports from the plurality of service reports as the service reports with the k highest scores.

In an example, the score for each service report is determined based on a ROUGE-2 Recall computation.

Thus, a similarity comparison is utilized to determine the most appropriate service reports to be used in generating a knowledge graph.

In this way, the effect of different report authors describing devices or types of devices is mitigated, and the system can still identify and retrieve the most appropriate search reports for a particular device in order that the information in that report can be used to form rules.

In an example, generation of the plurality of bigrams of the name or type of the first device in the query comprises removal of any spaces in the name or type of the first device in the query and the plurality of bigrams are generated from the name or type of the first device in the query that has had the spaces removed. For each service report saved in the database the plurality of bigrams of the name or type of the device associated with the service report were generated from the name or type of the device associated with the service report from which spaces had been removed.

In this way, the effect of different report authors using spaces different when describing a device or type of device is mitigated.

In an example, generation of the plurality of bigrams of the name or type of the first device in the query comprises a conversion of all letters in the name or type of the first device in the query to lower case and the plurality of bigrams are generated from the name or type of the first device in the query that has had all letters converted to lowercase. For each service report saved in the database the plurality of bigrams of the name or type of the device associated with the service report were generated from the name or type of the device associated with the service report where all letters in the name or type of device had been converted to lower case.

In this way, the effect of different report authors using different mixtures of upper and lower case characters to describe a device or type of device is mitigated.

In an example, the plurality of service reports comprise natural language in a plurality of different languages, the plurality of different languages comprising two or more of English, German, French, Italian, Spanish, French, Portuguese, Japanese, Chinese.

Thus, in effect the new development provides a pipeline that extracts electrical equipment and maintenance rule from multilingual natural language text in service reports, and employs a knowledge graph to appropriately store the extracted rules. In this manner, searching and information retrieval of relevant information for a current maintenance job in terms of locating the appropriate rules relating to the actions required to mitigate an issue at hand for a particular instrument type is made more efficient.

In an example, each knowledge graph node comprises at least one searchable attribute or property, the at least one searchable attribute or property comprising at least one of device name or type, issue, action step.

This makes searching with respect to instruments, issues, and actions more efficient.

In an example, the system comprises an output unit 40, wherein the output unit is configured to output the knowledge graph.

Thus, the knowledge graph can then be used on/by another system.

An associated rule generating method comprises:
- receiving, by an input unit, a first query, wherein the first query comprises a name or type of a first device;
- providing, by the input unit, the first query to a rule generator;
- retrieving, by the rule generator, k service reports of a plurality of service reports stored in a database, wherein the retrieval of the k service reports comprises utilization of the first query, where k is an integer greater than 1, and wherein each service report comprises natural language;
- utilizing, by the rule generator, a Large Language Model (LLM) to identify entries from the natural language in the k service reports, wherein the identified entries comprise issues that need to be addressed for the first device, and actions taken by service technicians to mitigate the issues; and
- utilizing, by the rule generator, the identified entries to form at least one rule for the first device, wherein each rule comprises a tuple of the first device name or type, one issue, and an action step or series of action steps taken to mitigate the issue

It is to be noted that retrieval of the k service reports utilizing the first query does not mean that the k service reports are downloaded or moved from the database, but retrieval of the k service reports utilizing the first query can mean that the k service reports are selected or identified utilizing the first query.

In this way, appropriate service reports can be retrieved to generate a knowledge graph.

In an example, the method comprises:
generating, by the rule generator, a knowledge graph, and wherein the generating comprises utilizing the at least one rule for the first device.

It is to be noted that implementation of a Large Language Model (LLM), can mean utilizing an existing LLM to fit the specific needs, or can mean that an LLM is in effect constructed for the specific needs.

The knowledge graph nodes that are linked together can be considered as a rule relating to the action steps required to mitigate an issue for an instrument type.

In an example, the plurality of service reports comprise natural language in a plurality of different languages, the plurality of different languages comprising two or more of English, German, French, Italian, Spanish, French, Portuguese, Japanese, Chinese.

The plurality of different languages can be other than these languages, and could be any language of a service report.

Thus, the system works in one unified language, but is able to work with reports from many languages or indeed a single report with more than one language within it.

In an example, the method comprises;
- utilizing, by the rule generator, the at least one rule for the first device to generate at least one knowledge graph node, wherein for the first device name or type, each issue, and action step are transformed into separate knowledge graph nodes; and
- utilizing, by the rule generator, the at least one knowledge graph node to generate the knowledge graph, the generating comprising forming at least one node group, wherein each node group comprises at least one knowledge graph node.

In an example, the method comprises:
- receiving, by the input unit, a second query, wherein the second query comprises a name and/or type of a second device;
- providing, by the input unit, the second query to the rule generator;
- retrieving, by the rule generator, m service reports of the plurality of service reports, wherein the retrieval of the m service reports comprises utilization of the second query, and where m is an integer greater than 1;
- utilizing, by the rule generator, the LLM to identify entries from the natural language in the m service reports, wherein the identified entries comprise issues that need to be addressed for the second device, and actions taken by service technicians to mitigate the issues;
- utilizing, by the rule generator, the identified entries to form at least one rule for the second device, wherein each rule comprises a tuple of the second device name or type, one issue, and an action step or series of action steps taken to mitigate the issue; and
- wherein the generating the rule and knowledge graph comprises utilizing the at least one rule for the second device.

In an example, the method comprises:
- utilizing, by the rule generator, the plurality of rules to generate a plurality of knowledge graph nodes, wherein each instrument device name or type, issue, and action step are transformed into separate knowledge graph nodes; and
- utilizing, by the rule generator, the plurality of knowledge graph nodes to generate the knowledge graph, the generating comprising forming a plurality of node groups, wherein each node group comprises a plurality of knowledge graph nodes that are linked together.

In an example, the method comprises:
- generating, by the rule generator, a plurality of bigrams of the name or type of the first device in the query, and wherein each of the plurality of service reports stored in the database comprises associated information, wherein the associated information for each service report comprises a plurality of bigrams of a name or type of a device associated with the service report, and
- wherein the retrieving the k service reports comprises comparing the plurality of bigrams of the name or type of the first device in the query with the plurality of bigrams of the name or type of the device associated with each service report.

In an example, the method comprises:
- determining, by the rule generator, for each service report stored in the database, a score based on the comparison of the plurality of bigrams of the name or type of the first device in the query with the plurality of bigrams of the name or type of the device associated with that service report, and
- selecting, by the rule generator, the k service reports from the plurality of service reports as the service reports with the k highest scores.

In an example, the score for each service report is determined based on a ROUGE-2 Recall computation.

Thus, a similarity comparison is utilized to determine the most appropriate service reports to be used in generating a knowledge graph.

In this way, the effect of different report authors describing devices or types of devices is mitigated, and the system can still identify and retrieve the most appropriate search reports for a particular device in order that the information in that report can be used to form rules.

In an example, generating the plurality of bigrams of the name or type of the first device in the query comprises removing any spaces in the name or type of the first device in the query, and the plurality of bigrams are generated from the name or type of the first device in the query that has had the spaces removed, and wherein for each service report saved in the database the plurality of bigrams of the name or type of the device associated with the service report were generated from the name or type of the device associated with the service report from which spaces had been removed.

In this way, the effect of different report authors using spaces different when describing a device or type of device is mitigated.

In an example, generating the plurality of bigrams of the name or type of the first device in the query comprises converting all letters in the name or type of the first device in the query to lower case and the plurality of bigrams are generated from the name or type of the first device in the query that has had all letters converted to lowercase, and wherein for each service report saved in the database the plurality of bigrams of the name or type of the device associated with the service report were generated from the name or type of the device associated with the service report where all letters in the name or type of device had been converted to lower case.

In this way, the effect of different report authors using different mixtures of upper and lower case characters to describe a device or type of device is mitigated.

In an example, the plurality of service reports comprise natural language in a plurality of different languages, the plurality of different languages comprising two or more of English, German, French, Italian, Spanish, French, Portuguese, Japanese, Chinese.

Thus, in effect the new development provides a pipeline that extracts electrical equipment and maintenance rule from multilingual natural language text in service reports, and employs a knowledge graph to appropriately store the extracted rules. In this manner, searching and information retrieval of relevant information for a current maintenance job in terms of locating the appropriate rules relating to the actions required to mitigate an issue at hand for a particular instrument type is made more efficient.

In an example, each knowledge graph node comprises at least one searchable attribute or property, the at least one searchable attribute or property comprising at least one of device name or type, issue, action step.

This makes searching with respect to instruments, issues, and actions more efficient.

In an example, the method comprises outputting, by an output unit, the knowledge graph.

The inventors also realized that the rule generator 10 of the rule generation system 100 could operate as a rule generator of a rule preparation generation system, that was able to ensure that device names in new service reports were appropriate for such a new service report to be used in the generation of a rule. Indeed, the rule generation system 100 can operate as such a rule preparation generation system.

Such a rule preparation generation system comprises:
- an input unit 20;
- a rule generator 10; and
- a database 30.

The input unit is configured to receive a candidate device name or type, wherein the candidate device name or type is comprised within a new service report.

The input unit is configured to provide the candidate device name or type to the rule generator.

The rule generator is configured to select a device name or type from a plurality of target device names or types, the selection comprised utilization of the candidate device name or type.

The rule generator is configured to update the candidate device name or type in the new service report with the selected device name or type to generate an updated new service report.

The rule generator is configured to save the updated new service report in the database.

Thus, the rule generator is configured to interrogate a new service report, that can have device names or types written in a bespoke manner based on the technician who wrote the report. At this stage, it is difficult to use such a report, with a device name or type written in a form that could be non-standard, in the generation of a rule. However, now the device name or type in the new service report has been updated to a standard device name or type, and this updated new report can be utilized in the generation of a new rule.

It is to be noted that the rule generator 10 of the rule generation system 100 can operate as the rule generator of the rule preparation generation system. Indeed, the rule generation system 100 can operate as the rule preparation generation system.

In this way, appropriate service reports can be retrieved to generate a knowledge graph.

In an example, the candidate device name or type is extracted from the new service report by a LLM.

In an example, the candidate device name or type is extracted from the new service report by a human.

In an example, the plurality of target device names or types are stored in a database or a memory of the rule preparation generation system.

In an example, the rule generator is configured to generate a plurality of bigrams of the candidate device name or type. Each of the plurality of target device names or types comprises associated information, and the associated information for each target device name or type comprises a plurality of bigrams of the target device name or type of a device. The selection of the device name or type from the plurality of target device names or types comprises a comparison of the plurality of bigrams of the of the candidate device name or type with the plurality of bigrams of each target device name or type of the plurality of target devices or types.

In an example, for each target device name or type the rule generator is configured to determine a score based on the comparison of the plurality of bigrams of the of the candidate device name or type with the plurality of bigrams of the target device name or type. The rule generator is configured to select the device name or type from the plurality of target device names or types as the target device name or type with the highest score.

In an example, the score for each target device name or type is determined based on a ROUGE-2 Recall computation.

Thus, a similarity comparison is utilized to determine the most appropriate device name or type to be used to replace the candidate device name or type in a new service report.

In this way, the effect of different report authors describing devices or types of devices is mitigated, and the system can still identify and retrieve the most appropriate search reports for a particular device in order that the information in that report can be used to form rules.

In an example, the generation of the plurality of bigrams of the candidate device name or type comprises removal of any spaces in the candidate device name or type and the plurality of bigrams are generated from the candidate device name or type that has had the spaces removed. For each target device name or type the plurality of bigrams of each target device name or type were generated from each target device name or type from which spaces had been removed.

In this way, the effect of different report authors using spaces different when describing a device or type of device is mitigated.

In an example, the generation of the plurality of bigrams of the candidate device name or type comprises a conversion of all letters in the candidate device name or type to lower case and the plurality of bigrams are generated from the candidate name or type that has had all letters converted to lowercase. For each target device name or type the plurality of bigrams of the target device name or type were generated from the target device name or type that has had all letters converted to lower case.

In this way, the effect of different report authors using different mixtures of upper and lower case characters to describe a device or type of device is mitigated.

In an example, the system comprises an output unit 40, wherein the output unit is configured to save the updated new service report in the database.

An associated rule preparation generating method comprises:
- receiving, by an input unit, a candidate device name or type, wherein the candidate device name or type is comprised within a new service report;
- providing, by the input unit, the candidate device name or type to a rule generator;
- selecting, by the rule generator, a device name or type from a plurality of target device names or types, the selecting comprised utilizing the candidate device name or type;
- updating, by the rule generator, the candidate device name or type in the new service report with the selected device name or type to generate an updated new service report; and
- saving, by the rule generator, the updated new service report in a database.

Thus, the rule preparation generating method interrogates a new service report, that can have device names or types written in a bespoke manner based on the technician who wrote the report. At this stage, it is difficult to use such a report, with a device name or type written in a form that could be non-standard, in the generation of a rule. However, now the device name or type in the new service report has been updated to a standard device name or type, and this updated new report can be utilized in the generation of a new rule.

In this way, appropriate service reports can be retrieved to generate a knowledge graph.

In an example, the candidate device name or type is extracted from the new service report by a LLM.

In an example, the candidate device name or type is extracted from the new service report by a human.

In an example, the plurality of target device names or types are stored in a database or a memory of the rule preparation generating system.

In an example, the method comprises generating, by the rule generator, a plurality of bigrams of the candidate device name or type. Each of the plurality of target device names or types comprises associated information, and the associated information for each target device name or type comprises a plurality of bigrams of the target device name or type of a device. The selecting the device name or type from the plurality of target device names or types comprises comparing the plurality of bigrams of the of the candidate device name or type with the plurality of bigrams of each target device name or type of the plurality of target devices or types.

In an example, the method comprises, for each target device name or type, determined by the rule generator, a score based on the comparing the plurality of bigrams of the of the candidate device name or type with the plurality of bigrams of the target device name or type. The selecting, by the rule generator, the device name or type from the plurality of target device names or types comprises selecting a target device name or type with the highest score.

In an example, the score for each target device name or type is determined based on a ROUGE-2 Recall computation.

Thus, a similarity comparison is utilized to determine the most appropriate device name or type to be used to replace the candidate device name or type in a new service report.

In this way, the effect of different report authors describing devices or types of devices is mitigated, and the system can still identify and retrieve the most appropriate search reports for a particular device in order that the information in that report can be used to form rules.

In an example, the generating the plurality of bigrams of the candidate device name or type comprises removing any spaces in the candidate device name or type and the plurality of bigrams are generated from the candidate device name or type that has had the spaces removed. For each target device name or type the plurality of bigrams of each target device name or type were generated from each target device name or type from which spaces had been removed.

In this way, the effect of different report authors using spaces different when describing a device or type of device is mitigated.

In an example, the generating the plurality of bigrams of the candidate device name or type comprises converting all letters in the candidate device name or type to lower case and the plurality of bigrams are generated from the candidate name or type that has had all letters converted to lowercase. For each target device name or type the plurality of bigrams of the target device name or type were generated from the target device name or type that has had all letters converted to lower case.

In this way, the effect of different report authors using different mixtures of upper and lower case characters to describe a device or type of device is mitigated.

Thus, the new development provides a solution on how to extract rules from Service Reports using Large Language Models (LLMs), store the collection of generated rules, search through them, and generate a Knowledge Graph, where a similarity score is computed when comparing two device names, where a device name that can contain "errors" is compared to a "clean" device name stored in some master database, and where the device name with errors is in effect cleaned. The similarity score is used to retrieve the top k most similar device names from a knowledge base, given a specific device name using the score, in order that the most appropriate and relevant service reports can be utilized to generate rules.

The inventors arrived at the new development, from an understanding that searching for relevant information is an important activity for most professional groups, and is a means for achieving competitive advantage. In the context of maintenance of electrical equipment, searching for relevant maintenance rules helps in faster troubleshooting of faults, thereby reducing downtime of customer equipment and facilities.

However, the inventors realized that searching for information which is most relevant to the issue at hand is a complex task. Relevant information is dispersed across manuals and service reports in multiple languages, and is not easily accessible in an integrated, easily searchable manner. Furthermore, the inventors realized that often different reports can refer to a same device or instrument in different ways, where abbreviations can be used, one author can write a device name as a single long name that includes reference numerals, whilst another author would write the same device name as a number of separate words, and different authors intersperse a device name with capital letters at different points in a device name. This then meant that searching for information based on a device name was not simple.

The inventors apprised themselves with knowledge that recently, due to the rapid development of Generative Al the application of Large Language Models (LLMs) for information extraction from natural language text has gained significant traction. The models are effective in scenarios that require the parsing of large, unstructured texts in different languages.

The inventors were thus faced with the situation that managing device names within technical reports presents a significant challenge due to the variability in how these names are written in the report: some technicians may include a lot of information concerning the device (e.g. Serial Number, voltage, etc.) while others write just the broad and generic name. Inconsistent naming across reports leads to fragmented information, making it harder to associate issues with the correct devices. The inventors realized that when extracting device names from reports, it is therefore important to match them, if possible, with existing device names to ensure expressive rules. Unfortunately, device names rely on structural properties (i.e., character sequences and word forms), making machine learning models unsuitable for this task and this led the inventors to the realization to use a similarity score.

Thus, the inventors realized that such state-of-the-art LLMs could be utilized in a new way to provide an effective support tool for service personnel, which led to the new development. The inventors augmented this through utilization of a score based system to enable the most relevant reports to be retrieved for rule generation.

The new development, in a detailed embodiment, in effective provides a solution pipeline to:
(i) retrieve the most relevant service reports from a database using a similarity score based approach,
(ii) extract electrical equipment maintenance rules from natural language text in the retrieved service reports,
(iii) employ a knowledge graph to appropriately store the extracted rules, which makes searching and information retrieval efficient.

The mechanism by which the most relevant device names are retrieved from a database is described with reference to Fig. 2.

The new development uses a score to retrieve similar device names by comparing a newly extracted device name, subject to noise, to a database of existing device names. This score will:
1) focus on the internal structure of words (i.e., character sequences).
2) Ignore spaces, as technicians may use inconsistent conventions (e.g. "DPAUPScale" vs "DPA UPScale").
3) Disregard case sensitivity, as device names may appear with varying capitalization (e.g. "VD4" vs "vd4").

The new development consists of 3 steps:
1. Remove spaces and convert both the candidate and target device names to lowercase. This avoids penalizing differences due to inconsistent naming conventions involving spacing or capitalization.
2. Generate bigrams from the device names and compute ROUGE-2 Recall at the character level to measure the similarity between the candidate and target names.
3. Perform the pairwise score for all target names in the database and return the top-k matches with the highest similarity scores.

ROUGE-2 considers the overlap between character-level bigrams of target and candidate name. One can consider the overlap of candidate over target (Precision), overlap of target over candidate (Recall) or the harmonic mean of the two (F1-score). Since the device names stored in the knowledge graph are assumed to be correct, maximizing recall is the goal. This ensures that the system captures as much of the target name as possible when matching against the extracted candidate.

The inventors decided to use bigrams for the following reasons:
ROUGE-2 (bigrams) strikes a balance: unigrams (single characters) are too simplistic and do not capture enough context, while trigrams (three characters) might be too strict and penalizing, leading to unnecessarily low scores, especially when device names are typically short (often fewer than 10 characters).

Once a score is computed between the candidate and all the targets, the devices associated to the top k scores (where k can be decided based on the need of the task) will be retrieved and utilized to generate rules and a knowledge graph. The retrieved reports can also be analyzed by a human.

The inventors decided to use ROUGE-2 and not embedding distance for the following reasons:
Embedding models capture semantic relationships based on the context in which a word appears. This works well for general text but not for domain-specific terms like device names. These models, trained on data where such terms are rare, often generate poor representations. ROUGE-2, by contrast, compares bigram overlaps, capturing the internal structure of names. Since device names are typically highly structured, ROUGE-2 provides more accurate matches by focusing on their form rather than their contextual meaning, making it more reliable for tasks requiring precise retrieval. The inventors also considered using character-level embeddings; however, these models are highly sensitive to noise, which is the case here, and this would negatively impact the quality of the embeddings and, consequently, the retrieval process.

The inventors decided to use ROUGE-2 and not Edit distance for the following reasons:
The edit distance (or Levenshtein distance) is not well-suited for this metric, as it penalizes names based purely on the number of character additions needed to match them. This measure does not effectively capture similarity for our purpose, which is to identify whether a substring exists within the original name.

When considering the target "VD4" and two candidates, "HD4" and "VD4 SN374834939." For "HD4," the edit distance is 1, while for "VD4 SN374834939," it's 12. However, the second candidate ("VD4 SN374834939") should be prioritized over "HD4" since it fully contains the target substring, indicating a closer match.

By adopting this strategy, similar devices can be merged, significantly enhancing the quality and expressiveness of the generated Knowledge Graph. This improvement allows technicians to quickly identify the correct rules and resolve issues more efficiently. Additionally, in the context of switchgear maintenance, this method facilitates the accurate identification and comparison of device names, leading to more effective maintenance schedules and reduced downtime.

Regarding the stages involved to convert from natural language text to searchable knowledge graph of maintenance rules, the following applies:

### Stage 1: Extraction of rules from multilingual natural language text in service reports:

Maintenance rules are extracted from multilingual service reports using state-of-the-art (SOTA) Large Language Models (LLMs) in a two-step approach. (The SOTA LLMs are able to parse texts different languages (such as English, German, Italian, Spanish, French, etc.) due to the vast amounts of data they are trained on.)

In the first step, the LLM identifies and extracts appropriate entities from the natural language text of the report. Identified entities include the name and type of electrical instrument(s) mentioned in the report, the problems or issues that need to be addressed for those instrument(s), and the actions taken by the service technician to mitigate the issue.

Then, in the second step, these identified entities are linked together to form rules. Each rule is a tuple of one instrument, one issue, and the series of actions taken to mitigate the issue. Multiple rules can be extracted from a single report, and hence the second step is needed to correctly identify such rules from all the entities identified in the first step.

### Stage 2: Storage of rules in a Knowledge Graph:

After the collection of rules have been identified from Stage 1, they are inserted into a knowledge graph. Each instrument, issue, and step in the list of actions are transformed into knowledge graph nodes, and they are linked together appropriately. Nodes in a knowledge graph can have different attributes and properties, such that all "Instrument-nodes" are of one "type", all "Issue-nodes" are of another type, and so on. This makes searching only among instruments or issues fast and efficient.

Searching for related issues is a technical challenge, since two issues can be semantically identical, yet use different words, synonyms and linguistic patterns. A SOTA LLM helps to identify the most semantically similar search results for a given issue. However, the final call of deciding if two issues are similar or not is taken by a domain expert, who is the "owner" of the Knowledge Graph of rules.

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A rule generation system (100), comprising:
- an input unit (20);
- a rule generator (10); and
- a database (30);
wherein the input unit is configured to receive a first query, wherein the first query comprises a name or type of a first device;
wherein the input unit is configured to provide the first query to the rule generator;
wherein a plurality of service reports are stored in the database, wherein each service report comprises natural language;
wherein the rule generator is configured to retrieve k service reports of the plurality of service reports stored in the database, wherein the retrieval of the k service reports comprises utilization of the first query, and where k is an integer greater than 1;
wherein the rule generator is configured to implement a Large Language Model (LLM);
wherein the rule generator is configured to utilize the LLM to identify entries from the natural language in the k service reports, wherein the identified entries comprise issues that need to be addressed for the first device, and actions taken by service technicians to mitigate the issues; and
wherein the rule generator is configured to utilize the identified entries to form at least one rule for the first device, wherein each rule comprises a tuple of the first device name or type, one issue, and an action step or series of action steps taken to mitigate the issue.

2. System according to claim 1, wherein the rule generator is configured to generate a knowledge graph, and wherein the generation comprises utilization of the at least one rule for the first device.

3. System according to claim 2, wherein the rule generator is configured to utilize the at least one rule for the first device to generate at least one knowledge graph node, wherein for the first device name or type, each issue, and action step are transformed into separate knowledge graph nodes; and
wherein the rule generator is configured to utilize the at least one knowledge graph node to generate the knowledge graph, the generation comprising forming at least one node group, wherein each node group comprises at least one knowledge graph node.

4. System according to any of claims 2-3, wherein the input unit is configured to receive a second query, wherein the second query comprises a name and/or type of a second device;
wherein the input unit is configured to provide the second query to the rule generator;
wherein the rule generator is configured to retrieve m service reports of the plurality of service reports, wherein the retrieval of the m service reports comprises utilization of the second query, and where m is an integer greater than 1;
wherein the rule generator is configured to utilize the LLM to identify entries from the natural language in the m service reports, wherein the identified entries comprise issues that need to be addressed for the second device, and actions taken by service technicians to mitigate the issues;
wherein the rule generator is configured to utilize the identified entries to form at least one rule for the second device, wherein each rule comprises a tuple of the second device name or type, one issue, and an action step or series of action steps taken to mitigate the issue; and
wherein the generation of the knowledge graph comprises utilization of the at least one rule for the second device.

5. System according to claim 4, wherein the rule generator is configured to utilize the plurality of rules to generate a plurality of knowledge graph nodes, wherein each instrument device name or type, issue, and action step are transformed into separate knowledge graph nodes; and
wherein the rule generator is configured to utilize the plurality of knowledge graph nodes to generate the knowledge graph, the generation comprising forming a plurality of node groups, wherein each node group comprises a plurality of knowledge graph nodes that are linked together.

6. System according to any of claims 1-5, wherein the rule generator is configured to generate a plurality of bigrams of the name or type of the first device in the query, and wherein each of the plurality of service reports stored in the database comprises associated information, wherein the associated information for each service report comprises a plurality of bigrams of a name or type of a device associated with the service report, and wherein the retrieval of the k service reports comprises a comparison of the plurality of bigrams of the name or type of the first device in the query with the plurality of bigrams of the name or type of the device associated with each service report.

7. System according to claim 6, wherein for each service report stored in the database the rule generator is configured to determine a score based on the comparison of the plurality of bigrams of the name or type of the first device in the query with the plurality of bigrams of the name or type of the device associated with that service report, and wherein the rule generator is configured to select the k service reports from the plurality of service reports as the service reports with the k highest scores.

8. System according to any of claims 6-7, wherein generation of the plurality of bigrams of the name or type of the first device in the query comprises removal of any spaces in the name or type of the first device in the query and the plurality of bigrams are generated from the name or type of the first device in the query that has had the spaces removed, and wherein for each service report saved in the database the plurality of bigrams of the name or type of the device associated with the service report were generated from the name or type of the device associated with the service report from which spaces had been removed.

9. System according to any of claims 6-8, wherein generation of the plurality of bigrams of the name or type of the first device in the query comprises a conversion of all letters in the name or type of the first device in the query to lower case and the plurality of bigrams are generated from the name or type of the first device in the query that has had all letters converted to lowercase, and wherein for each service report saved in the database the plurality of bigrams of the name or type of the device associated with the service report were generated from the name or type of the device associated with the service report where all letters in the name or type of device had been converted to lower case.

10. A rule generating method, comprising:
- receiving, by an input unit, a first query, wherein the first query comprises a name or type of a first device;
- providing, by the input unit, the first query to a rule generator;
- retrieving, by the rule generator, k service reports of a plurality of service reports stored in a database, wherein the retrieval of the k service reports comprises utilization of the first query, where k is an integer greater than 1, and wherein each service report comprises natural language;
- utilizing, by the rule generator, a Large Language Model (LLM) to identify entries from the natural language in the k service reports, wherein the identified entries comprise issues that need to be addressed for the first device, and actions taken by service technicians to mitigate the issues; and
- utilizing, by the rule generator, the identified entries to form at least one rule for the first device, wherein each rule comprises a tuple of the first device name or type, one issue, and an action step or series of action steps taken to mitigate the issue.

11. Method according to any of claims 10, wherein the method comprises:
- generating, by the rule generator, a plurality of bigrams of the name or type of the first device in the query, and wherein each of the plurality of service reports stored in the database comprises associated information, wherein the associated information for each service report comprises a plurality of bigrams of a name or type of a device associated with the service report, and
- wherein the retrieving the k service reports comprises comparing the plurality of bigrams of the name or type of the first device in the query with the plurality of bigrams of the name or type of the device associated with each service report.

12. Method according to claim 11, wherein the method comprises:
- determining, by the rule generator, for each service report stored in the database, a score based on the comparison of the plurality of bigrams of the name or type of the first device in the query with the plurality of bigrams of the name or type of the device associated with that service report, and
- selecting, by the rule generator, the k service reports from the plurality of service reports as the service reports with the k highest scores.

13. Method according to any of claims 11-12, wherein generating the plurality of bigrams of the name or type of the first device in the query comprises removing any spaces in the name or type of the first device in the query, and the plurality of bigrams are generated from the name or type of the first device in the query that has had the spaces removed, and wherein for each service report saved in the database the plurality of bigrams of the name or type of the device associated with the service report were generated from the name or type of the device associated with the service report from which spaces had been removed.

14. Method according to any of claims 12-14, wherein generating the plurality of bigrams of the name or type of the first device in the query comprises converting all letters in the name or type of the first device in the query to lower case and the plurality of bigrams are generated from the name or type of the first device in the query that has had all letters converted to lowercase, and wherein for each service report saved in the database the plurality of bigrams of the name or type of the device associated with the service report were generated from the name or type of the device associated with the service report where all letters in the name or type of device had been converted to lower case.

15. A rule preparation generation system, comprising:
- an input unit (20);
- a rule generator (10); and
- a database (30);
wherein the input unit is configured to receive a candidate device name or type, wherein the candidate device name or type is comprised within a new service report;
wherein the input unit is configured to provide the candidate device name or type to the rule generator;
wherein the rule generator is configured to select a device name or type from a plurality of target device names or types, the selection comprised utilization of the candidate device name or type;
wherein the rule generator is configured to update the candidate device name or type in the new service report with the selected device name or type to generate an updated new service report; and
wherein the rule generator is configured to save the updated new service report in the database.

16. A rule preparation generating method, comprising:
- receiving, by an input unit, a candidate device name or type, wherein the candidate device name or type is comprised within a new service report;
- providing, by the input unit, the candidate device name or type to a rule generator;
- selecting, by the rule generator, a device name or type from a plurality of target device names or types, the selecting comprised utilizing the candidate device name or type;
- updating, by the rule generator, the candidate device name or type in the new service report with the selected device name or type to generate an updated new service report; and
- saving, by the rule generator, the updated new service report in a database.

17. A computer program element for controlling a processor to carry out the method of any of claims 10-14 or 16.
